# EUROPEAN PATENT APPLICATION

(11) **EP 4 752 752 A1**
(43) Date of publication of application: **03.06.2026**
(21) Application number: 25218359.5
(22) Date of filing: 25.11.2025
(51) Int. Cl.: G06F 16/3329

(54) **ENHANCING RETRIEVAL AUGMENTED GENERATION WITH SUBJECT MATTER EXPERTISE**

(30) Priority: 02.12.2024 US 202418965866
(71) Applicant: Microsoft Technology Licensing, LLC, Redmond, WA 98052 (US)
(72) Inventor: HIGHMAN, Christopher Carl, Redmond, Washington, 98052 (US)
(74) Representative: CMS Cameron McKenna Nabarro Olswang LLP

(57) **Abstract**

Methods, apparatuses, and products for enhancing retrieval augmented generation with subject matter expertise, including: generating, based on a semantic persona, documented learnings associated with content ingested by a reflection engine; identifying, from a knowledge base that is used for retrieval augmented generation, one or more entries within the knowledge base that are associated with the documented learnings; and generating a mapping between the documented learnings and the one or more entries, wherein retrieval augmented generation ('RAG') is performed by a large language model ('LLM') using, based on the generated mappings, the knowledge base and the documented learnings.

## Description

### BACKGROUND

Generative Artificial Intelligence ('AI') applications such as Large Language Models ('LLM') are being widely deployed and utilized. Training LLMs can be extremely expensive and time-consuming. As such, the process of retraining an LLM can occur infrequently and the LLM's knowledge can become stale over time. To address this issue, LLMs may implement Retrieval-Augmented Generation ('RAG') techniques, where the LLM can augment its responses by retrieving relevant information from an external knowledge base when generating responses. Through the usage of RAG, the LLM can access up-to-date information and specific domain knowledge, while still leveraging its ability to understand context and generate coherent text. RAG does have limitations, however, as it may fail to acquire deep understanding and expertise on a particular topic. Furthermore, as entries are added to the external knowledge base over time, these new entries aren't reconciled with previous entries to validate data, reconcile differences, nor are the new entries and existing entries evaluated in parallel to derive any higher-level knowledge.

### SUMMARY

According to embodiments of the present disclosure, various methods, apparatus, and products for enhancing retrieval augmented generation with subject matter expertise are described herein. In some aspects, enhancing retrieval augmented generation with subject matter expertise includes: generating, based on a semantic persona, documented learnings associated with content ingested by a reflection engine; identifying, from a knowledge base that is used for retrieval augmented generation, one or more entries within the knowledge base that are associated with the documented learnings; and generating a mapping between the documented learnings and the one or more entries. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 illustrates a block diagram of an example system that can be used to enhance retrieval augmented generation with subject matter expertise in accordance with some embodiments.
Fig. 2 sets forth a flow chart illustrating an example method for enhancing retrieval augmented generation with subject matter expertise in accordance with some embodiments.
Fig. 3 sets forth a flow chart illustrating an example method for enhancing retrieval augmented generation with subject matter expertise in accordance with some embodiments.
Fig. 4 sets forth a flow chart illustrating an example method for enhancing retrieval augmented generation with subject matter expertise in accordance with some embodiments.
Fig. 5 sets forth a flow chart illustrating an example method for enhancing retrieval augmented generation with subject matter expertise in accordance with some embodiments.
Fig. 6 sets forth an example of a computing device that may be used for some portion of enhancing retrieval augmented generation with subject matter expertise in accordance with some embodiments.
Fig. 7 sets forth a block diagram of a cloud service provider service architecture in accordance with some embodiments of the present disclosure.

### DESCRIPTION OF EMBODIMENTS

In order to enable LLMs to perform RAG, the contents of some additional knowledge base (also referred to as a RAG knowledge base) may be transformed into some machine-readable format. For example, the contents of the RAG knowledge base may be represented as one or more vector embeddings that are stored in one or more vector databases. These machine-readable representations, however, may exist as individual pieces of information that have no established relationship with each other and no relationship with any other source of information. Furthermore, because an LLM may not be trained on the content of the RAG knowledge base, the LLM may only be able to gain insights that are reflected in the RAG knowledge base entries themselves.

In order to allow a RAG-enabled LLM to gain a deeper understanding of the content within the RAG knowledge base, embodiments described here can identify relationships between pieces of information in the RAG knowledge base. For example, relationships may be established between two vector embeddings that represent two support tickets that have some relationship. Likewise, the embodiments described here can identify relationships between one or more entries in the RAG knowledge base and some other information source. For example, relationships may be established between a vector embedding that represents a support ticket as well as some document that describes related aspects of the system in which the issues that are reflected in the support ticket occurred. As new entries are added to the RAG knowledge base, a process may be performed to identify relationships between the new entries and existing entries in the RAG knowledge base, as well as the new entries and some other source of information or knowledge. Establishing relationships between these otherwise unrelated pieces of information may be carried out in a variety of ways, and the relationships themselves can take different forms.

Establishing relationships between otherwise unrelated pieces of information can include, for example, using a specially configured artificial intelligence ('AI') agent that is prompted to perform some deeper analysis of the RAG knowledge base or some other data source. The specially configured AI agent may be embodied, for example, as an LLM agent that is built around an LLM and pre-configured with a series of prompts that can be used to define the objectives and interests of the LLM agent. For example, an LLM agent may be pre-configured with a series of prompts that describes questions that the LLM agent would like to have answered, information describing the objectives that the LLM agent is attempting to achieve, and so on.

Consider an example in which an LLM is configured to access a collection of support tickets that have been investigated and resolved by some support team. In this example, if an LLM is configured to use the collection of support tickets as a knowledge base to leverage when performing RAG, the LLM agent may be configured with a series of prompts designed to develop domain expertise that may be useful in providing better responses than can be achieved by standard RAG techniques. The series of prompts may include objectives such as, for example, 'identifying the order in which queries were made to resolve some issue specified in the support ticket,' 'identifying the data sources that were accessed when investigating some issue,' and many others. Each set of prompts may be designed to focus on some specific issue (e.g., a technical issue, a procedural issue) and may be designed to investigate an issue from different perspectives (e.g., investigate from the perspective of a user, a database administrator, a storage administrator). These different perspectives and different prompts may be codified as distinct personas, which will be explained in greater detail below. In such a way, each LLM agent may be designed to focus on some specific aspect of a knowledge space and each LLM agent may have different things that it is trying to learn.

Once the series of prompts have been executed by the one or more LLM agents and responses to the prompts have been received, the LLM agents may pass the responses (or information associated with the responses) to a reflection engine to identify relationships between various pieces of information that are contained in the knowledge base that is used to perform RAG, as well as relationships between other data that is ingested by the reflection engine and the various pieces of information that are contained in the knowledge base that is used to perform RAG. For example, the reflection engine may extrapolate and expand on data received after the LLM agent executes its prompts, and subsequently apply one or more forms of reasoning to create a more comprehensive understanding of the data including identifying relationships between different pieces of data. By applying different forms of reasoning, the reflection engine may identify connections between different pieces of data, understand the relationships between different pieces of data, and understand how the different pieces of data can be used to form a more complete or deeper understanding of some subject that the pieces of data are related to.

After developing a deeper understanding of the data in a knowledge base that is used for RAG, including identifying relationships between pieces of data in the knowledge base or information from other sources, actions may be taken to couple this deeper understanding with the knowledge base. Such actions can include, for example, codifying relationships between data in the knowledge base and some related data (whether in the knowledge base or external to the knowledge base) such that when an LLM retrieves some piece of data as part of a RAG process, the related information is also presented to the LLM. In such a way, LLMs that use the knowledge base for RAG may also leverage this deeper understanding that can be gained from persona-driven reflection, such that the LLMs may perform RAG in such a way that reflects a deep understanding and expertise on the content of the knowledge base.

By incorporating this deeper understanding that can be gained from persona-driven reflection, the actual output from submitting a prompt to an LLM may be different than would occur using traditional RAG techniques. Because the output from LLMs may be different (and reflect a deeper domain expertise), the LLM may be able to answer questions in a deeper and more informed manner. In such a way, this augmented LLM may be able to deliver higher quality responses than traditional LLMs, leading to greater adoption of the augmented LLM. Furthermore, by delivering higher quality responses, this may actually reduce the number of prompts to the LLM as users can have their questions answered more thoroughly and more quickly, reducing the need for performing multiple queries that are expensive to respond to. Furthermore, because new information can be continuously fed to the reflection engine, stale or incorrect information may be updated or corrected.

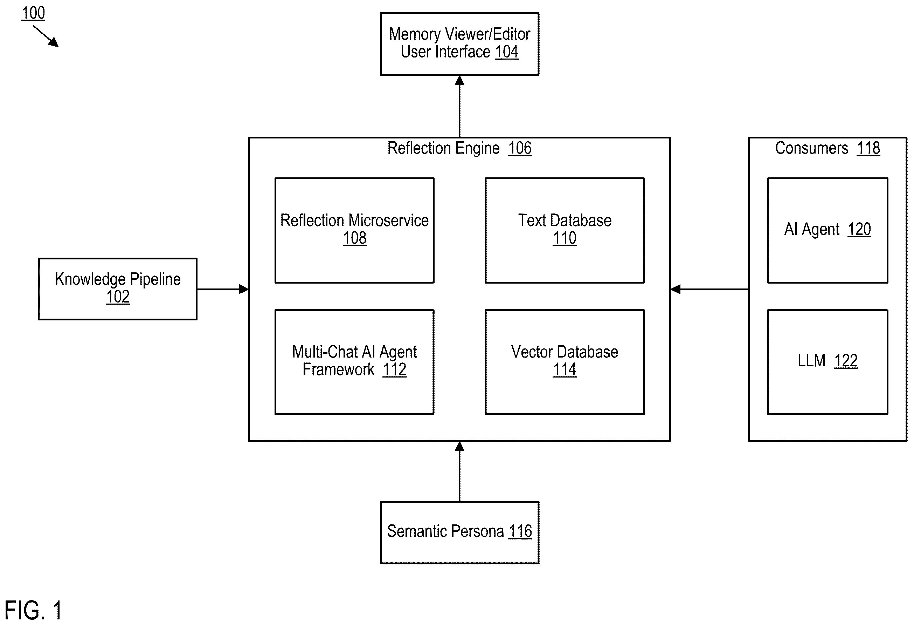

As an explanatory aid, Fig. 1 illustrates a block diagram of an example system 100 that can be used to enhance retrieval augmented generation with subject matter expertise in accordance with some embodiments. The example in Fig. 1 includes a reflection engine 106 that includes components that collectively examine content that is obtained via a knowledge pipeline 102 and derive knowledge from that content using various forms of reasoning (e.g., deductive reasoning, statistical reasoning, counterfactual reasoning). The particular components of the reflection engine 106 will be described in greater detail below, but the operation of the reflection engine 106 is influenced by one or more semantic personas 116 that can impact what sort of information the reflection engine 106 engine is looking for, what sort of knowledge that the reflection engine 106 is attempting to obtain, and generally impacts the objectives of the reflection engine 106.

A semantic persona 116 can include a set of prompts that provide instructions for inspecting and interpreting information. The semantic persona 116 may be embodied, for example, as one or more LLM agents in that facilitate the sorting, updating, and expanding mechanism of context from observed data. In such an example, the LLM agents can chat with each other to optimize, expand, and validate content. Each of the LLM agents may be embodied, for example, as an AI application built around an LLM. Each LLM agent may be integrated with other tools, external knowledge bases, workflows, and so on.

The prompts that are associated with a particular semantic persona 116 can essentially define what the one or more LLM agents are looking for when presented with some information and what their objectives (i.e., what are the LLM agents attempting to learn). Consider an example in which the reflection engine 106 is being provided a set of support tickets from the knowledge pipeline 102, where each of the support tickets describe some issue that was encountered, a series of steps that were performed to investigate the issue, and a set of actions that were implemented to remediate the issue. In this example, assume that the following prompt was included in a particular persona:
You are a business operations analyst whose objective is to create a set of process flows from pieces of documentation. Given the information provided, can you analyze and describe the role and purpose of the entities mentioned? Also, can you explain the relationships between these entities? Lastly, based on these relationships, what can we infer about the purpose of these entities and their interactions? For instance, if there are tables or databases mentioned, what might their roles be within the system? If there are operations or processes mentioned, how might they interact with these tables or databases?

In this example, the semantic persona 116 can include an LLM agent that executes the prompt, using at least the information (e.g., the support tickets) from the knowledge pipeline 102 when executing the prompt. In such an example, the LLM agent may examine the support tickets and attempt to create process flows that capture the process for discovering, investigating, and remediating support issues based on the content of the support tickets. Likewise, the LLM agent may identify the tables and databases that were accessed in each of the steps in the processes based on the content of the support tickets. In such a way, the reflection engine 106 can gain deeper knowledge on a particular topic (e.g., the process for resolving support tickets and what databases/tables are accessed as part of that process). Readers will appreciate that many different semantic personas may be implemented, each of which is aimed at gaining a deeper understanding of some topic. For example, a second LLM agent may be configured with one or more prompts and may utilize one or more data sources, for example, to learn more technical details about specific issues identified in a support ticket (e.g., the prompt may state "You are a cybersecurity analyst whose objective is to learn details about any threats or vulnerabilities referenced in a support ticket. Given the information provided, can you analyze and describe any threats or vulnerabilities referenced in a support ticket? Why are these threats or vulnerabilities a problem and what can be the consequences of failing to remediate the threat or vulnerability..."). Readers will appreciate that many other LLM agents may be configured with some other goal or objective regarding what output they create, what particular issues and topics they are to learn more about, and so on.

In Fig. 1, the reflection engine 106 includes a multi-chat AI agent framework 112. The multi-chat AI agent framework 112 can include one or more LLM agents that are generated to support each semantic persona 116. In such an example, the one or more LLM agents may be configured to interact with each other, including one LLM agent sending a query that another agent is to execute, one LLM agent sending the output of a query to another LLM agent, and so on. In such a way, the LLM agents may provide additional information to each other, ask for additional information from each other, and exchange information for some purpose (e.g., to reach a consensus, to perform some deeper analysis). Each of the LLM agents may be created, for example, using Microsoft's AutoGen^{™}, which is an open-source framework that allows developers to build LLM applications by composing multiple agents to converse with each other to accomplish tasks. Such LLM agents may be customizable, conversable, and can operate in various modes that employ combinations of LLMs, human inputs, and tools.

The multi-chat AI agent framework 112 can provide a system where multiple LLM agents interact with each other, and even potentially interact with human users. Each LLM agent may be designed to have a specific role, function, or perspective. Each of the LLM agents may even collaborate or compete in pursuit of some goal. For instance, one LLM agent might be optimized for examining error logs while another LLM agent is optimized for examining database transactions. The LLM agents may work together to solve complex tasks that may require multiple perspectives or capabilities. In fact, in some embodiments the LLM agents may even have conflicting goals or strategies to simulate negotiation or collaborative reasoning. The multi-chat AI agent framework 112 may include mechanisms to facilitate the exchange of information between LLM agents, including specifying communications protocols that are to be used by each of the LLM agents.

The reflection engine 106 of Fig. 1 also includes a reflection microservice 108. A reflection microservice 108 may be embodied, for example, as one or more microservices that collectively form an AI system designed to improve the reliability and accuracy of LLMs by implementing a form of "self-reflection" such that the AI system can analyze and critique its own responses before providing them to users. The reflection microservice 108 can review its own outputs for potential errors or inconsistencies, break down complex problems into smaller steps, handle uncertainty by recognizing and acknowledging when it's uncertain about something, and so on. In some embodiments, an LLM may generate a "rough draft" response that may be analyzed by the reflection microservice 108 to check for logical errors or inconsistencies, to check if conclusions follow from premises, to perform chain of thought verification, to evaluate and assess the confidence in different parts of the response, identify knowledge gaps, and so on. The reflection microservice 108 may even implement multiple perspectives by generating multiple approaches to the same problem, comparing different reasons paths, and selecting the most reliable approach. This can be augmented through the usage of different semantic personas 116 that represent different perspectives. While the reflection microservice 108 may implement different techniques such as recursive evaluation, factual consistency checks, semantic analysis, or other techniques. The reflection microservice 108 will also implement multi-agent reflection where the different LLM agents review the response, with each agent focused on some specific aspect of the response. Examples can include persona-based LLM agents, fact checker agents, logic verification agents, and so on.

The reflection engine 106 of Fig. 1 is also depicted as including a text database 110 and a vector database 114 (although 110 and 114 may also exist externally to the reflection engine 106 in some embodiments). The vector database 114 depicted in Fig. 1 may be embodied as a specialized database designed to store and efficiently search through vector embeddings, which may be highly dimensional representations of data that capture the meaning or features of data in a high-dimensional space. The vector database 114 of Fig. 1 may be used to store data that is used for RAG, as the vector database 114 may include supplemental data that may be useful in generating high quality responses to queries that are directed to an LLM that utilizes the vector database 114 for RAG.

The text database 110 of Fig. 1 may be created based on LLM agents that are part of the multi-chat AI agent framework 112, as the LLM agents may curate well-organized documentation from the context derived through the usage of semantic personas 116. Documentation sections may be sized to fit single chunks for embedding, and a tight coupling may exist between these sections in a text database 110 and their embeddings in the vector database 114. Alternatively, a hierarchical tagging scheme can be used solely with a vector database 114.

Each entry in the text database may be generated by one or more LLM agents in the multi-chat AI agent framework 112 that are attempting to process and learn from data that is ingested via the knowledge pipeline 102, where each LLM agent is associated with some semantic persona 116 that impacts what the LLM agent is attempting to process or learn. Consider an example where one or more LLM agents in the multi-chat AI agent framework 112 are attempting to understand the relationship between various columns in different tables or databases by examining data describing how an order is processed through some retailer's systems as part of an audit to identify un-invoiced sales. In such an example, after evaluating database transactions associated with an order flowing through the retailer's systems, the one or more LLM agents in the multi-chat AI agent framework 112 may produce the following output:
The 'SellInAudit' table in the 'control' database and the 'UnbilledAssetsContractV1' table in the 'ledger' database, both located in different clusters, are interconnected. The 'SellInAudit' table identifies discrepancies in sales data, while the 'UnbilledAssetsContractV1' table cross-checks this data against unbilled assets. This relationship is crucial for auditing discrepancy detection, ensuring financial accuracy and integrity. The 'MissingIn' field in the 'SellAudit" table seems to indicate the direction of this discrepancy.

In this example, the text that is generated by one or more LLM agents in the multi-chat AI agent framework 112 may be converted into a vector embedding that is placed in the vector database 114 for searching when an LLM is using the vector database 114 to perform RAG. A mapping may be created between the text that is generated by one or more LLM agents in the multi-chat AI agent framework 112 and its associated vector embedding that is placed in the vector database 114. For example, the text that is generated by one or more LLM agents in the multi-chat AI agent framework 112 may be embodied as a document and an ID for the document may be included in the vector embedding to establish a mapping between the vector embedding and the text document. Readers will appreciate that as additional content is provided to the reflection engine over time, additional reflection may take place and the text that is generated by one or more LLM agents in the multi-chat AI agent framework 112 may be updated. Because a mapping already exists between the vector embedding and the document, the vector database 114 may capture these updates via the mapping, even if the vector database 114 itself is not updated.

The reflection engine 106 of Fig. 1 is coupled to a memory viewer/editor user interface 104. The memory viewer/editor user interface 104 of Fig. 1 may be embodied as a user interface that allows a user of the system 100 to see what documentation is being created, verify its correctness, suggest changes, approve the documentation, or take other actions. In such a way, the memory viewer/editor user interface 104 allows some level of user reinforcement or user input.

The reflection engine 106 of Fig. 1 is depicted as being accessed by various consumers 118, which can include an AI agent 120 or an LLM 122. The consumers 118 may be configured to use resources that are depicted as being part of the reflection engine 106 including, for example, the vector database 114 and the text database 110. For example, the LLM 122 may use the vector database 114 and the text database 110 to perform RAG. In other embodiments, other consumers 118 of the reflection engine 106 may access the reflection engine 106 or its components.

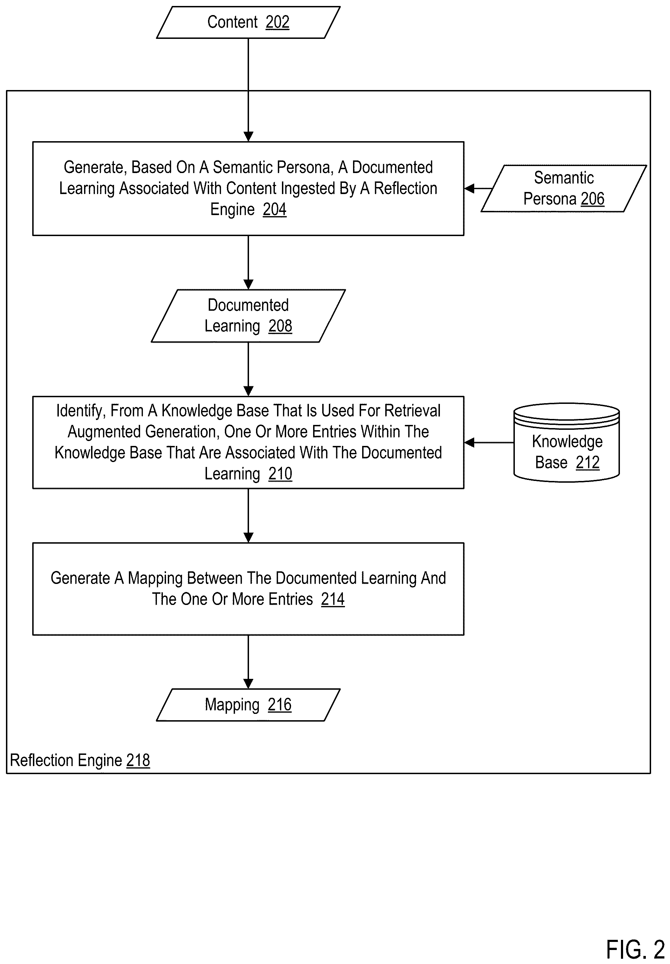

For further explanation, Fig. 2 sets forth a flow chart illustrating an example method for enhancing retrieval augmented generation with subject matter expertise in accordance with some embodiments. The example depicted in Fig. 2 includes generating 204, based on a semantic persona 206, a documented learning 208 associated with content 202 ingested by a reflection engine 218. The content 202 that is ingested by a reflection engine 218 can take many forms and be provided by many sources. For example, the content 202 can include pull requests for a code repository in embodiments where the reflection engine 218 is attempting to gain some deeper understanding of a user's code base, evaluate defects in some deployed code, or gain some other insights that are related to an organization's code. Likewise, the content 202 can include transcripts from meetings that were conducted for some project where the reflection engine 218 is attempting to gain insights regarding how and why a particular project ended up in its current state. Furthermore, the content 202 can even be specifically created for the purposes of submitting it to a reflection engine 218 (e.g., having senior technical leadership within an organization take a 'quiz' to answer questions about technical assets or projects that they are managing). Other sources such as error logs, activity logs, stack traces, or other content that is automatically generated may also be examples of content 202 that is ingested by a reflection engine 218. In general, the content 202 may be any form of data that can be mined for insights and learnings related to a specific topic.

In the example depicted in Fig. 2, the reflection engine 218 generates 204 documented learnings 208 associated with content 202 based on a semantic persona 206. As described above, a semantic persona 206 may be embodied as one or more LLM agents in that facilitate the sorting, updating, and expanding mechanism of context from ingested content 202, where the LLM agents are configured with a set of prompts that provide instructions for inspecting and interpreting information. The prompts may be designed to reflect some perspective or objective for the semantic persona 206.

Consider an example in which a business organization suspected that their information technology infrastructure might be vulnerable to some cybersecurity threat. In this example, one semantic persona 206 may be configured with a set of prompts that are associated with a 'security analyst' persona, so that the one or more LLM agents are configured with a set of prompts designed to obtain information that would be similar to what a security analyst would attempt to obtain when investigating some cybersecurity threat. A second semantic persona 206, however, may be configured with a set of prompts that are associated with a 'storage administrator' persona, so that the one or more LLM agents are configured with a set of prompts that designed to obtain information similar to what a storage administrator would attempt to obtain when investigating how to respond to some cybersecurity threat (e.g., what data protection policies should be in place, what encryption should I use in our storage systems, what replication policies should I implement to protect our data). Furthermore, a third semantic persona 206 may may be configured with a set of prompts that are associated with a 'help desk' persona, so that the one or more LLM agents are configured with a set of prompts that designed to obtain information similar to what help desk personnel would attempt to obtain when investigating how to respond to some cybersecurity threat (e.g., patches should I install on our employee's devices, do I need to install VPN software on our laptops, should I configure our devices to use single sign on).

In the example of Fig. 2, the reflection engine 218 may generate 204 documented learnings 208 associated with content 202 based on the one or more semantic personas 206. The reflection engine 218 may generate 204 documented learnings 208 associated with content 202 based on the one or more semantic personas 206, for example, using a multi-chat agent framework as described above. In such an example, the multi-chat agent framework can include the persona-based LLM agents that execute their pre-configured prompts to gain insights that are specific to their learnings. These persona-based LLM agents can even interact with each other or with other special purpose LLM agents (e.g., a fact checker agent) as the multi-chat agent framework provides a system where multiple AI agents, powered by large language models, interact with each other and/or with human users.

In the example of Fig. 2, generating 204 documented learnings 208 associated with content 202 based on a semantic persona 206 may be carried out, for example, by incorporating the dialog between LLM agents in the multi-chat AI agent framework into a document such as a markdown file. In such an example, the LLM agents that conduct said dialog can include an LLM agent generated based on the semantic persona 206. In such an example, the dialog may be filtered, summarized, formatted, or otherwise prepared for inclusion in a document by the LLM agent generated based on the semantic persona 206 or by some other LLM agent such as a special purpose formatting agent. Readers will appreciate that the documented learnings 208 can refer to other documents, take content from other documents, incorporate content from sources other than the dialog between the LLM agents, or from some other source. A documented learning can even be linked to a table of contents that describes the structure of a set of documented learnings 208. In such a way, because the learnings are documented, the learnings may be retrieved and utilized for RAG at a later time. Readers will appreciate that in other embodiments, the documented learnings 208 may be incorporated into some other format such as a table entry, a database entry, or in some other way that enables the learnings to be retained and retrieved for later usage.

The example depicted in Fig. 2 also includes identifying 210, from a knowledge base 212 that is used for retrieval augmented generation, one or more entries within the knowledge base 212 that are associated with the documented learnings 208. As described above, the documented learnings 208 are associated with some subject or topic. Identifying 210 one or more entries within the knowledge base 212 that are associated with the documented learnings 208 may therefore be carried out, for example, by searching the knowledge base 212 for entries that are associated with that some subject or topic. For example, if some documented learnings 208 are created to review how a customer's order goes through a retailer's system (e.g., an order is created, merchandise that is specified in the order is obtained, packaged, shipped, and payment is ultimately received) and these documented learnings 208 reveal that various databases are touched but that each database includes a universal order identifier that is reflected in each database), identifying 210 one or more entries within the knowledge base 212 that are associated with the documented learnings 208 may be carried out by searching the knowledge base 212 that is used for retrieval augmented generation for any entries that reference a universal order identifier. Readers will appreciate that in other embodiments identifying 210 one or more entries within the knowledge base 212 that are associated with the documented learnings 208 may be carried out in other ways.

The example depicted in Fig. 2 also includes generating 214 a mapping 216 between the documented learnings 208 and the one or more entries within the knowledge base 212 that are associated with the documented learnings 208. Generating 214 a mapping 216 between the documented learnings 208 and the one or more entries within the knowledge base 212 that are associated with the documented learnings 208 may be carried out, for example, by attaching a tag to an entry in the knowledge base 212 that includes an identifier for an associated documented learning 208, by maintaining a data structure (e.g., a table, a graph) that associates an identifier of an entry in the knowledge base 212 with an identifier for an associated documented learning 208, or in some other way. In such a way, when RAG is performed and specific entries in the knowledge base 212 are selected to be passed to an LLM to help the LLM deliver a more informed response, any documented learnings 208 that are associated with the selected entries in the knowledge base 212 may also be passed to an LLM to help the LLM deliver a more informed response.

In the example depicted in Fig. 2 and many of the other embodiments described here, RAG is performed by an LLM using, based on the generated mappings, content from the knowledge base 212 and content from the documented learnings 208. In the process of performing RAG, the knowledge base 212 may be searched for relevant entries and the selected relevant entries will be passed to the LLM and used by the LLM as it generates some response. In addition to passing the knowledge base 212 entries to the LLM, any documented learnings 208 that are mapped to the selected relevant entries in the knowledge base 212 will also be passed to the LLM and used by the LLM as it generates some response. In such a way, the LLM may respond to prompts in a more detailed, more thorough, more knowledgeable manner.

Consider the example described above in which the knowledge base 212 includes vector embeddings that represent different support tickets from a support system. In such an example, assume that documented learnings 208 were generated to examine the support tickets, identify process flows, involved actors, details about those involved actors, details about remediation steps, details taken from support notes, and other learnings. In such a way, by returning not only the relevant support tickets to some LLM that is performing RAG using the support tickets, the documented learnings 208 that are associated with vector embeddings that are being passed to the LLM may also be passed to the LLM so that the LLM can generate responses that reflect all of the different, curated learnings that were achieved by the LLM agents.

In the example depicted in Fig. 2, the knowledge base 212 includes a vector database with machine-readable vector embeddings as entries and the documented learnings 208 can include natural language expressions, where each documented learning is mapped to a vector embedding in the vector database. The vector database may be similar to the vector databases described elsewhere in this disclosure. The documented learnings 208 may be embodied, for example, as a collection of markdown files that are stored in a database or in some other data repository. In such a way, the LLM may perform RAG by retrieving both vector embeddings and natural language input as the data sources that will be used for RAG.

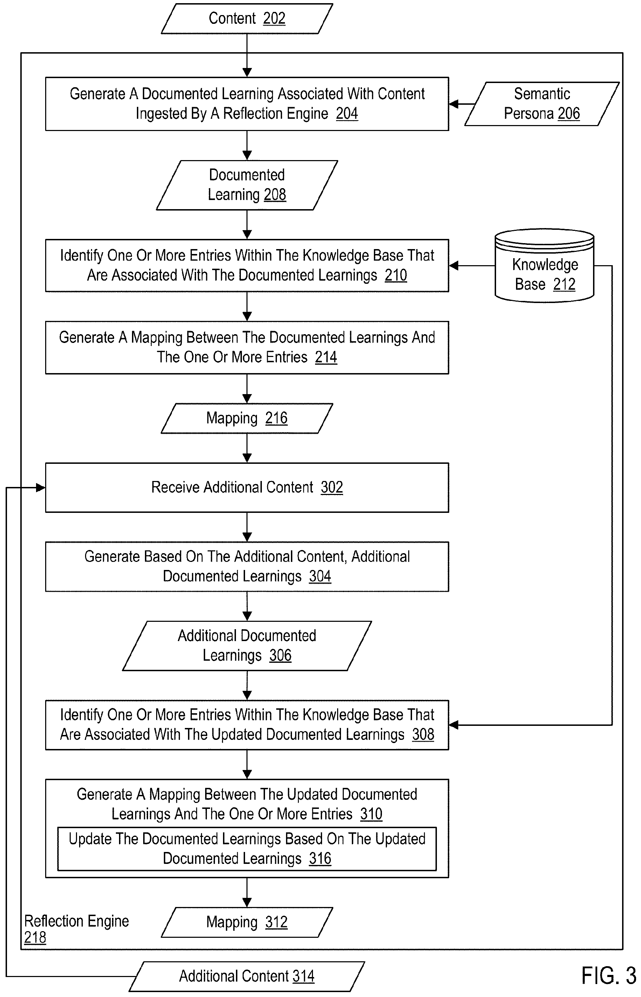

For further explanation, Fig. 3 sets forth a flow chart illustrating an additional example method for enhancing retrieval augmented generation with subject matter expertise in accordance with some embodiments. The example depicted in Fig. 3 includes receiving 302 additional content 314. The additional content 314 may be embodied, for example, as additional documentation associated with some subject, updated versions of documentation that was previously used for reflection, additional content generated by LLM agents (e.g., the content from additional dialog between LLM agents in the multi-chat agent framework), additional documented learnings that were derived by other LLM agents in the multi-chat agent framework, or in some other way. Receiving 302 additional content 314 may be carried out, for example, by some centralized service determining that new content is available that may be used to refine some previously established documented learnings 208, by one or more LLM agents that were used to generate the documented learnings 208 periodically polling some data repository that contains content to be reflected upon, or in some other way.

The example depicted in Fig. 3 also includes generating 304, based on the additional content 314, an additional documented learning 306. Generating 304 the additional documented learnings 306 may be carried out using the process described above for generating documented learnings, but in this example the additional content 314 may be taken into consideration during the reflection process. The additional content 314 may be used in addition to the content 202 that was previously used, as a replacement for the content 202 that was previously used, or in some combination thereof. For example, if the additional content 314 represents an updated version of some previously used content 202, the reflection process may be performed by including the additional content 314 and excluding the original content 202 from consideration. If the additional content 314 is supplementary to the original content 202, however, the reflection process may be performed taking both the additional content 314 and the original content 202 into consideration. In these examples, the additional documented learnings 306 may serve as replacements of the original documented learnings 208 (either by replacing the original documented learnings 208 with the additional documented learnings 306, or altering the original documented learnings 208 to reflect the additional documented learnings 306).

The example depicted in Fig. 3 also includes identifying 308, from a knowledge base 212 that is used for retrieval augmented generation, one or more entries within the knowledge base 212 that are associated with the additional documented learnings 306. Identifying 308 one or more entries within the knowledge base 212 that are associated with the additional documented learnings 306 may be carried out as described above, but using the additional documented learnings 306 rather than the original documented learnings 208 to identify related content in the knowledge base 212.

The example depicted in Fig. 3 also includes generating 310 a mapping 312 between the additional documented learnings 306 and the one or more entries. Generating 310 a mapping 312 between the additional documented learnings 306 and the one or more entries in the knowledge base that are identified 308 as being associated with the additional documented learnings 306 may be carried out as described above, using the additional documented learnings 306 in the generated mapping. Readers will appreciate that using this process, the system may continue to derive additional learnings as new content is received, and the mappings between the new learnings and the knowledge base 212 may be made transparently to the LLM that utilizes the knowledge and the documented learnings for RAG.

The example depicted in Fig. 3 can also include updating 316 the documented learnings 208 based on the additional documented learnings 306. Although Fig. 3 shows an example where updating 316 the documented learnings based on the additional documented learnings 306 is performed as part of generating 310 the mapping 312 between the additional documented learnings 306, in other embodiments updating 316 the documented learnings based on the additional documented learnings 306 can be performed independently of any other steps. Updating 316 the documented learnings 208 based on the additional documented learnings 306 may be carried out, for example, by replacing some content contained in the original documented learnings 208 with content from the additional documented learnings 306, by augmenting the content in the original documented learnings 208 with content from the additional documented learnings 306, or in some other way. In this example, by updating the original documented learnings 208 (e.g., updating the markdown document rather than creating a new markdown document), existing mappings may continue to be leveraged rather than needing to update any mappings. As such, embodiments where the original documented learnings 208 are updated 316 may not require steps like generating new mappings, updating the knowledge base 212 to reflect those new mappings, and so on.

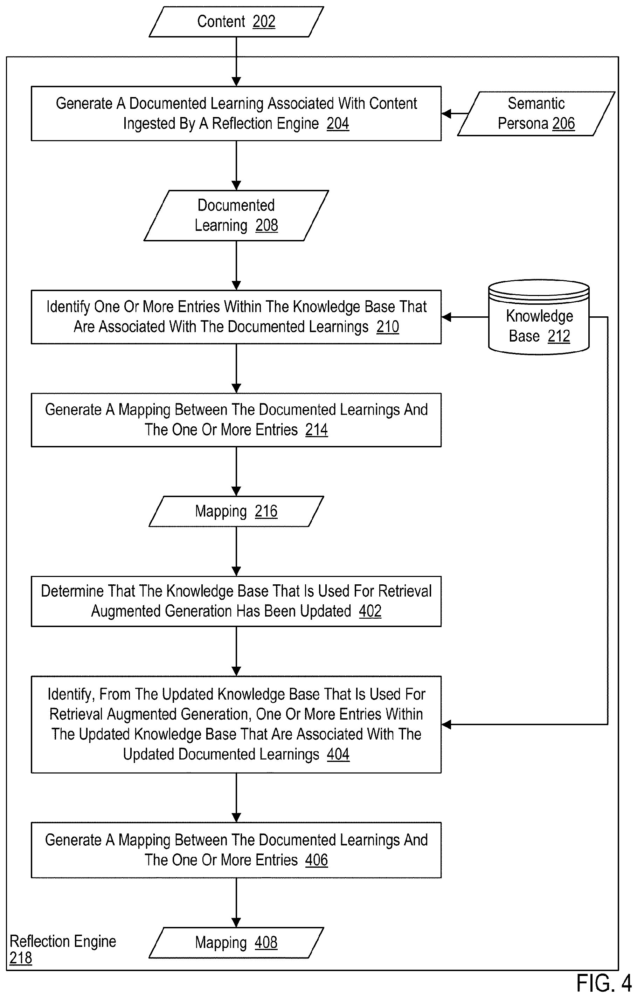

For further explanation, Fig. 4 sets forth a flow chart illustrating an additional example method for enhancing retrieval augmented generation with subject matter expertise in accordance with some embodiments. The example of Fig. 4 includes determining 402 that the knowledge base 212 that is used for retrieval augmented generation has been updated. The knowledge base 212 that is used for retrieval augmented generation may be updated periodically to reflect more recent information, the knowledge base 212 may be updated based on the occurrence of some event, the knowledge base 212 may be expanded to add new entries, the knowledge base 212 may have stale or poorly received entries removed, or the knowledge base 212 may be updated for some other reason. Determining 402 that the knowledge base 212 that is used for retrieval augmented generation has been updated may be carried out, for example, by monitoring the knowledge base 212 for updates, by receiving a notification that some update has been performed, or in some other way. In fact, the system may even operate under the assumption that upon the expiration of some predetermined period of time (e.g., every minute, hourly, daily) the knowledge base 212 is likely to have been updated such that the expiration of the predetermined period of time represents an affirmative determination 402 that the knowledge base 212 has been updated.

The example of Fig. 4 also includes identifying 404, from the updated knowledge base 212 that is used for retrieval augmented generation, one or more entries within the updated knowledge base 212 that are associated with the documented learnings 208. Identifying 404 one or more entries within the updated knowledge base 212 that are associated with the documented learnings 208 may be carried out as described above, this time searching the knowledge base 212 in its updated form.

The example of Fig. 4 also includes generating 406 a mapping 408 between the documented learnings 208 and the one or more entries in the updated knowledge base 212. Readers will appreciate that in this example, some original mappings may be retained, especially for entries in the knowledge base 212 that have not changed. For new entries or entries that have changed, however, mappings between these entries and the associated documented learnings may be generated 406 as described in greater detail elsewhere in the present disclosure. Readers will appreciate that by performing the steps above to monitor the knowledge base 212 for updates, new entries and modified entries in the knowledge base 212 may also be augmented with documented learnings 208 such that the associated documented learnings 208 can also be leveraged by an LLM when these new or modified entries are provided to the LLM for performing RAG.

In some embodiments, a mapping between the documented learnings (whether original or updated) and the one or more entries in the knowledge base 212 can include information identifying when the mapping was generated. The information identifying when the mapping was generated may be embodied, for example, as a timestamp. In such an example, timestamps may be used to identify a chain of mappings (e.g., entry 1 in the knowledge base initially was associated with a first documented learning at time 1, but entry 1 was later associated with a second documented learning at time 2). The chain of mappings may be useful in the generation of a response by an LLM as the LLM can use the can of mappings (or even the time values themselves) to provide context to some generated response. For example, the LLM can generate a response stating "support issue ABC was initially investigated by first looking at error logs up until January 1^{st}, 2024. Beginning on January 1^{st}, 2024, however, the process of investigating support issue ABC was updated to begin by looking at file access logs." In addition to being used to identify a chain of mappings, the information identifying when the mapping was generated can be used as evidence that a mapping is or is not likely to be current, or used for some other purpose. In fact, the information identifying when the mapping was generated may be useful when an administrator or other user is doing some human-involved validation using the user interfaces described in the present disclosure.

In some embodiments, the reflection engine includes a multi-chat AI agent framework that includes one or more LLM agents created based on a semantic persona. The reflection engine can include a multi-chat AI agent framework that includes one or more LLM agents created based on a semantic persona as described in greater detail above. In other embodiments, however, the multi-chat AI agent framework may be external to the reflection engine or configured in some other way to reflect on content that is provided to the reflection engine.

In some embodiments, the reflection engine includes a user interface for receiving user input. The user input may take many forms including, for example, presenting the user with some generated mapping to have the user confirm or deny that the mapping is appropriate. As such, in some embodiments a mapping is updated based on user input received via the user interface. Likewise, the user may also be presented with some documented learning so that they user can confirm or deny the accuracy of the learning, as well as provide input suggesting how the documented learning may be correct. As such, in some embodiments at least one documented learning is updated based on user input. Alternatively, the user interface may include mechanisms (and potentially prompts) that allow the user to provide information that may be used for reflection and documented learnings generation. For example, the user interface may provide the user with the ability to upload documents, videos, audio, or other information that may be taken into consideration during the reflection process. Likewise, questions may be presented to the user to either generate additional content to consider during reflection or to resolve ambiguity or low confidence in generated learnings (e.g., an LLM may present a user with a prompt via the user interface stating: "I think that the field OrderID in Table 1 may be the same value as the field InternalOrderNumber in Table 2. Is that correct?"). In other embodiments, the user interface may be used for additional purposes and may include additional components or functionality, including integration with one or more LLMs or LLM agents. As such, the system may present a user interface for receiving user input and update at least one mapping is updated based on user input. Likewise, the system may present a user interface for receiving user input and update at least one documented learning based on user input.

In some embodiments, generating the mapping between the documented learnings and the one or more entries can include tagging an entry in the knowledge base 212 with an identifier associated with a documented learning (whether an original documented learning or additional documented learning). In such embodiments, each entry may include metadata fields that can be used to include the identifier associated with a documented learning, or the identifier associated with a documented learning may be incorporated into the entry in some other way. Alternatively, tags could be applied in a hierarchical manner which would allow for a non-mirrored database system.

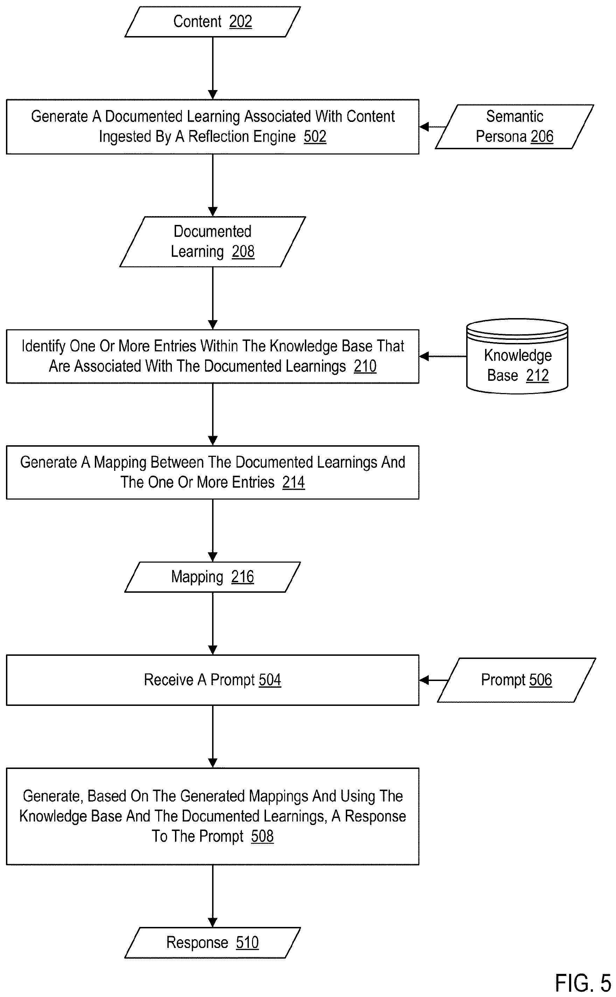

For further explanation, Fig. 5 sets forth a flow chart illustrating an additional example method for enhancing retrieval augmented generation with subject matter expertise in accordance with some embodiments. The example depicted in Fig. 5 includes generating 502, based on a semantic persona 206, documented learnings 208 associated with ingested content 202, as described in greater detail elsewhere in the present disclosure. The example depicted in Fig. 5 also includes identifying 210 one or more entries within the knowledge base 212 that are associated with the documented learnings 208 and generating 214 a mapping 216 between the documented learnings 208 and the one or more entries, as described elsewhere in the present disclosure.

The example depicted in Fig. 5 also includes receiving 504 a prompt 506. The prompt 506 in Fig. 5 may be embodied, for example, as a natural language expression that is fed as user input to an LLM. The prompt 506 may include a question, a request for additional information, a request for clarification, and so on. The natural language expression may be embodied, for example, as text, as text derived from speech using speech-to-text capabilities, as audio content or some other content in embodiments where the LLM is a multi-modal LLM. In this example, the prompt 506 can represent input to an LLM, such that the LLM can use the resources described and created about to perform RAG when generating a response to the prompt 506.

The example depicted in Fig. 5 also includes generating 508, based on the generated mappings 216 and using the knowledge base 212 and the documented learnings 208, a response 510 to the prompt 506. Generating 508 a response 510 to the prompt 506 may be carried out , based on the generated mappings 216 and using the knowledge base 212 and the documented learnings 208 in the sense that the LLM performs RAG where the knowledge base 212 is searched for relevant entries and, once relevant entries are found, the documented learnings 208 that are associated with the relevant entries in the knowledge base (as determined from the generated mapping 216 for each relevant entry) are also retrieved and provided to the LLM as content to use when performing RAG. In such a way, the LLM can generate a response to a prompt using, based on the generated mappings, the knowledge base and the documented learnings.

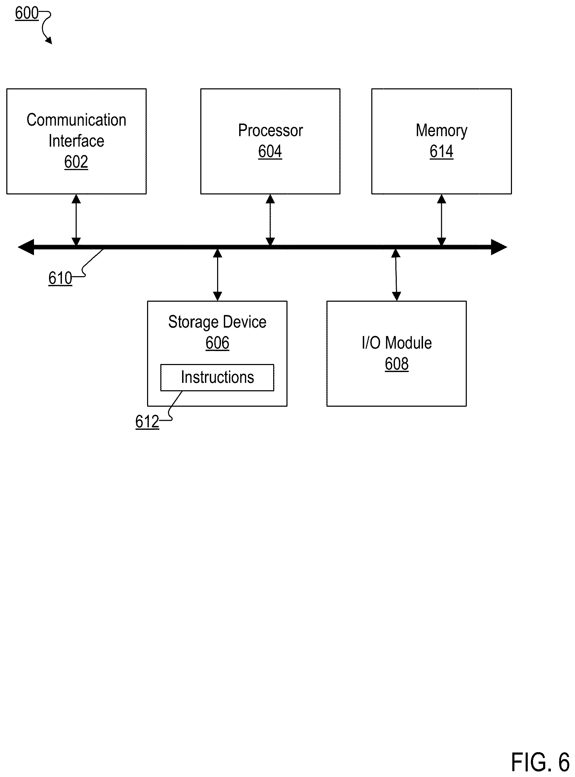

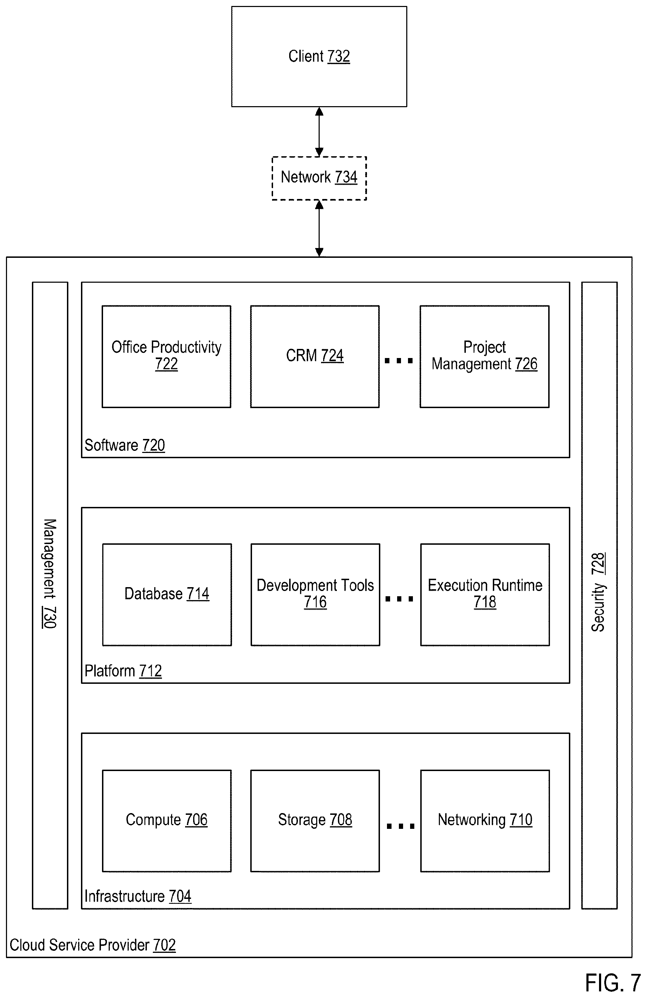

For further explanation, the sections included below provide some details regarding technologies that may be used to enhance retrieval augmented generation with subject matter expertise. For example, Fig. 6 sets forth an example of a computing device that may be used for some portion of enhancing retrieval augmented generation with subject matter expertise in accordance with some embodiments. As an additional example of technologies that may be used for enhancing retrieval augmented generation with subject matter expertise, Fig. 7 sets forth a block diagram of a cloud service provider 702 architecture in accordance with some embodiments of the present disclosure.

For further explanation, Fig. 6 illustrates an exemplary computing device 600 that may be specifically configured to perform one or more of the processes described herein. As shown in Fig. 6, computing device 600 may include a communication interface 602, a processor 604, a storage device 606, an input/output (I/O) module 608, and computer memory 614 communicatively connected one to another via a communication infrastructure 610. While an exemplary computing device 600 is shown in Fig. 6, the components illustrated in Fig. 6 are not intended to be limiting. Additional or alternative components may be used in other embodiments. Components of computing device 600 shown in Fig. 6 will now be described in additional detail.

Communication interface 602 may be configured to communicate with one or more computing devices. Examples of communication interface 602 include, without limitation, a wired network interface (such as a network interface card), a wireless network interface (such as a wireless network interface card), a modem, an audio/video connection, and any other suitable interface.

Processor 604 generally represents any type or form of processing unit capable of processing data and/or interpreting, executing, and/or directing execution of one or more of the instructions, processes, and/or operations described herein. Processor 604 may perform operations by executing computer-executable instructions 612 (e.g., an application, software, code, and/or other executable data instance) stored in storage device 606.

Storage device 606 may include one or more data storage media, devices, or configurations and may employ any type, form, and combination of data storage media and/or device. For example, storage device 606 may include, but is not limited to, any combination of non-volatile media and/or volatile media. Electronic data, including data described herein, may be temporarily and/or permanently stored in storage device 606. For example, data representative of computer-executable instructions 612 configured to direct processor 604 to perform any of the operations described herein may be stored within storage device 606. In some examples, data may be arranged in one or more databases residing within storage device 606.

I/O module 608 may include one or more I/O modules configured to receive user input and provide user output. I/O module 608 may include any hardware, firmware, software, or combination thereof supportive of input and output capabilities. For example, I/O module 608 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 608 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 608 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 600.

For further explanation and as an additional example of a supporting technology for enhancing retrieval augmented generation with subject matter expertise, Fig. 7 sets forth a block diagram of a cloud service provider 702 service architecture that may be utilized in accordance with some embodiments. The cloud service provider can deliver a variety resources through a services-based consumption model where resources are consumed on-demand and as-a-service. For example, a client 732 that is connected to the cloud service provider 702 by a network 734 may consume cloud services. Cloud service providers can provide services via cloud platforms such as, for example, Microsoft Azure^{™}, Amazon Web Services ('AWS')^{™}, Google Cloud Platform ('GCP')^{™}, and others.

Fig. 7 depicts an embodiment where software 720 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 7, as examples of software 720 that can be delivered as-a-service, the illustrated embodiment includes office productivity 722 software, customer relationship management ('CRM') 724 software, and project management 726 software. The office productivity 722 software can include applications designed to facilitate common business and personal tasks, including word processing applications, applications for spreadsheet creation, presentation design applications, and many others. The CRM 724 software can include applications for managing a business organization's relationships and interactions with customers and potential customers. The project management 726 software can include applications designed to help teams plan, organize, and manage projects efficiently by facilitating collaboration and tracking the progress of projects. Readers will appreciate that in other embodiments, other types of software may be delivered using a SaaS model.

Fig. 7 depicts an embodiment where platforms 712 can be delivered as a service. Platform-as-a-service ('PaaS') is a model that provides cloud customers with platform resources that they can use to develop, run, and manage applications without the complexity of such deploying and managing such infrastructure on their own. In Fig. 7, as examples of platform 712 resources that can be delivered as-a-service, the illustrated embodiment includes database 714 services, development tools 716 services, and execution runtime 718 services. The database 714 services can be used to provide access to databases without management overhead for the user as the cloud service provider manages the provisioning, scaling, and maintenance of the databases. The development tools 716 services can provide developers with tools to design, develop, test, and deploy applications without needing to manage the underlying infrastructure. The execution runtime 718 services can provide environments where applications or other forms of computer program code can be executed, including services to scale the execution environment. Readers will appreciate that in other embodiments, other platform resources may be delivered using a PaaS model.

Fig. 7 depicts an embodiment where infrastructure 704 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 7, as examples of infrastructure 704 resources that can be delivered as-a-service, the illustrated embodiment includes compute 706 services, storage 708 services, and networking 710 services. The compute 706 services can be used to provide on-demand access to computational resources such as VMs, containers, and serverless functions, where the cloud service provider manages the provisioning, scaling, and maintenance of such resources. The storage 708 services can provide storage resources that can be used to store and access data, without the need for customers to purchase and manage on-premises physical storage resources. The networking 710 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 7 also provides management 730 resources. The management 730 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 7 also provides security 728 resources. The security 728 resources can include, for example, tools and services to help customers protect their cloud environments and ensure compliance with security standards. These tools and services may provide specific aspects of security, including identity and access management, network security, threat detection, compliance management, and others.

Advantages and features of the present disclosure can be further described by the following statements:
1. A method of enhancing retrieval augmented generation with subject matter expertise, the method comprising: generating, based on a semantic persona, documented learnings associated with content ingested by a reflection engine; identifying, from a knowledge base that is used for retrieval augmented generation, one or more entries within the knowledge base that are associated with the documented learnings; and generating a mapping between the documented learnings and the one or more entries, wherein RAG is performed by an LLM using, based on the generated mappings, the knowledge base and the documented learnings.
2. A method of statement 1 wherein the knowledge base includes a vector database with machine-readable vector embeddings as entries and the documented learnings include natural language expressions, wherein each documented learning is mapped to a vector embedding in the vector database.
3. A method of any of statements 1-2, including combinations thereof, further comprising: receiving additional content; generating, based on the additional content, additional documented learnings; identifying, from a knowledge base that is used for retrieval augmented generation, one or more entries within the knowledge base that are associated with the additional documented learnings; and generating a mapping between the additional documented learnings and the one or more entries.
4. A method of any of statements 1-3, including combinations thereof, wherein generating the mapping between the additional documented learnings and the one or more entries further comprises updating the documented learnings based on the additional documented learnings.
5. A method of any of statements 1-4, including combinations thereof, further comprising: determining that the knowledge base that is used for retrieval augmented generation has been updated; identifying, from the updated knowledge base that is used for retrieval augmented generation, one or more entries within the updated knowledge base that are associated with the additional documented learnings; and generating a mapping between the documented learnings and the one or more entries.
6. A method of any of statements 1-5, including combinations thereof, wherein the mapping between the documented learnings and one or more entries in the knowledge base includes information identifying when the mapping was generated.
7. A method of any of statements 1-6, including combinations thereof, wherein the reflection engine includes a multi-chat AI agent framework that includes one or more LLM agents created based on a semantic persona.
8. A method of any of statements 1-7, including combinations thereof, wherein the reflection engine includes a user interface for receiving user input, wherein at least one mapping is updated based on user input.
9. A method of any of statements 1-8, including combinations thereof, wherein the reflection engine includes a user interface for receiving user input, wherein at least one documented learning is updated based on user input.
10. A method of any of statements 1-9, including combinations thereof, wherein generating the mapping between the documented learnings and the one or more entries further comprises tagging an entry in the knowledge base with an identifier associated with a documented learning.
11. A method of any of statements 1-10, including combinations thereof, further comprising: receiving a prompt; and generating, based on the generated mapping, a response to the prompt based on content in the knowledge base and content in the documented learning.
12. An apparatus for enhancing retrieval augmented generation with subject matter expertise, comprising: a memory; and one or more processing devices, operatively coupled to the memory, the one or more processing devices configured to: generate, based on a semantic persona, documented learnings associated with ingested content; identify, from a knowledge base that is used for retrieval augmented generation, one or more entries within the knowledge base that are associated with the documented learnings; generate a mapping between the documented learnings and the one or more entries; receive a prompt; and generate, based on the generated mappings and using the knowledge base and the documented learnings, a response to the prompt.
13. The apparatus of statement 12 wherein: the knowledge base includes a vector database with machine-readable vector embeddings as entries; and the documented learnings include natural language expressions, wherein each documented learning is mapped to a vector embedding in the vector database.
14. The apparatus of statement 12 or 13, wherein the one or more processing devices are further configured to: receive additional content; generate, based on the additional content, additional documented learnings; identify, from a knowledge base that is used for retrieval augmented generation, one or more entries within the knowledge base that are associated with the additional documented learnings; and generate a mapping between the additional documented learnings and the one or more entries.
15. The apparatus of any of statements 12-14, including combinations thereof, wherein the one or more processing devices are further configured to: determine that the knowledge base that is used for retrieval augmented generation has been updated; identify, from the updated knowledge base that is used for retrieval augmented generation, one or more entries within the updated knowledge base that are associated with the additional documented learnings; and generate a mapping between the documented learnings and the one or more entries.
16. The apparatus of any of statements 12-15, including combinations thereof, wherein the mapping between the documented learnings and one or more entries in the knowledge base includes information identifying when the mapping was generated.
17. A non-transitory computer readable storage medium storing instructions which, when executed, cause a processing device to: generate, based on a semantic persona, documented learnings associated with content ingested by a reflection engine; identify, from a knowledge base that is used for retrieval augmented generation, one or more entries within the knowledge base that are associated with the documented learnings; and generate a mapping between the documented learnings and the one or more entries, wherein a large language model ('LLM') generates a response to a prompt using, based on the generated mappings, the knowledge base and the documented learnings.
18. The non-transitory computer readable storage medium of statement 17 wherein the instructions, when executed, further cause a processing device to: present a user interface for receiving user input; update at least one mapping is updated based on user input.
19. The non-transitory computer readable storage medium of statement 17 or 18, wherein the instructions, when executed, further cause a processing device to: present a user interface for receiving user input; update at least one documented learning based on user input.
20. The non-transitory computer readable storage medium of any of statements 17-19, including combinations thereof, wherein the instructions, when executed, further cause a processing device to: receive additional content; generate, based on the additional content, additional documented learnings; identify, from a knowledge base that is used for retrieval augmented generation, one or more entries within the knowledge base that are associated with the additional documented learnings; and generate a mapping between the additional documented learnings and the one or more entries.
21. The non-transitory computer readable storage medium of any of statements 17-20, including combinations thereof, wherein the instructions, when executed, further cause a processing device to: determine that the knowledge base that is used for retrieval augmented generation has been updated; identify, from the updated knowledge base that is used for retrieval augmented generation, one or more entries within the updated knowledge base that are associated with the additional documented learnings; and generate a mapping between the documented learnings and the one or more entries.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud service provider, in one or more event-driven compute services such as those offered by a cloud service provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of enhancing retrieval augmented generation with subject matter expertise, the method comprising:
generating (204), based on a semantic persona (206), a documented learning (208) associated with content (202) ingested by a reflection engine (218);
identifying (210), from a knowledge base (212) that is used for retrieval augmented generation, one or more entries within the knowledge base (212) that are associated with the documented learning (208); and
generating (214) a mapping (216) between the documented learning and the one or more entries, wherein retrieval augmented generation 'RAG' is performed by a large language model 'LLM' using, based on the generated mapping (216), content from the knowledge base (212) and content from the documented learning (208).

2. The method of claim 1, wherein:
the knowledge base includes a vector database with machine-readable vector embeddings as entries; and
the documented learning includes a natural language expression, wherein each documented learning is mapped to a vector embedding in the vector database.

3. The method of claim 1 or claim 2, further comprising:
receiving additional content;
generating, based on the additional content, an additional documented learning;
identifying, from a knowledge base that is used for retrieval augmented generation, one or more entries within the knowledge base that are associated with the additional documented learning; and
generating a mapping between the additional documented learning and the one or more entries.

4. The method of claim 3, wherein generating the mapping between the additional documented learning and the one or more entries further comprises updating the documented learning based on the additional documented learning.

5. The method of any preceding claim, further comprising:
determining that the knowledge base that is used for retrieval augmented generation has been updated;
identifying, from the updated knowledge base that is used for retrieval augmented generation, one or more entries within the updated knowledge base that are associated with the documented learning; and
generating a mapping between the documented learning and the one or more entries in the updated knowledge base.

6. The method of any preceding claim, wherein the mapping between the documented learning and one or more entries in the knowledge base includes information identifying when the mapping was generated.

7. The method of any preceding claim, wherein the reflection engine includes a multi-chat AI agent framework that includes one or more LLM agents created based on a semantic persona.

8. The method of any preceding claim, wherein the reflection engine includes a user interface for receiving user input, wherein at least one mapping is updated based on user input.

9. The method of any preceding claim, wherein the reflection engine includes a user interface for receiving user input, wherein at least one documented learning is updated based on user input.

10. The method of any preceding claim, wherein generating the mapping between the documented learning and the one or more entries further comprises tagging an entry in the knowledge base with an identifier associated with the documented learning.

11. The method of any preceding claim, further comprising:
receiving a prompt; and
generating, based on the generated mapping, a response to the prompt based on content in the knowledge base and content in the documented learning.

12. An apparatus (600) for enhancing retrieval augmented generation with subject matter expertise, comprising:
a memory (614); and
one or more processing devices (604), operatively coupled to the memory (614), the one or more processing devices (604) configured to:
generate (204), based on a semantic persona (206), a documented learning (208) associated with ingested content (202);
identify (210), from a knowledge base (212) that is used for retrieval augmented generation, one or more entries within the knowledge base (212) that are associated with the documented learning (208);
generate a mapping (216) between the documented learning (208) and the one or more entries;
receive (504) a prompt (506); and
generate (508), based on the generated mapping (216), a response (510) to the prompt (506) based on content in the knowledge base (212) and content in the documented learning (208).

13. A non-transitory computer readable storage medium (606) storing instructions (612) which, when executed, cause a processing device (604) to:
generate (204), based on a semantic persona (206), a documented learning (208) associated with content (202) ingested by a reflection engine (218);
identify (210), from a knowledge base (212) that is used for retrieval augmented generation, one or more entries within the knowledge base (212) that are associated with the documented learning (208); and
generate (214) a mapping (216) between the documented learning (208) and the one or more entries, wherein a large language model 'LLM' generates (508) a response (510) to a prompt (506) using, based on the generated mappings (216), content from the one or more entries in the knowledge base (212) and content from the documented learning (208).

14. The non-transitory computer readable storage medium of claim 13, wherein the instructions, when executed, further cause a processing device to:
present a user interface for receiving user input; and
update at least one mapping is updated based on user input.

15. The non-transitory computer readable storage medium of claim 13 or claim 14 wherein the instructions, when executed, further cause a processing device to:
present a user interface for receiving user input; and
update at least one documented learning based on user input.
